# EUROPEAN PATENT SPECIFICATION

(11) **EP 2 847 494 B1**
(45) Date of publication and mention of the grant of the patent: **23.09.2020**
(21) Application number: 13719218.3
(22) Date of filing: 18.03.2013
(51) Int. Cl.: F16H 3/00, F16H 37/04

(54) **REVERSING DOUBLE - FLOW GEARBOX ARRANGEMENT, MAINLY FOR MOTOR VEHICLES AND CONSTRUCTION MACHINES, WITH TWO BRANCHES OF OUTPUT FLOW**
GETRIEBEANORDNUNG MIT UMKEHRBARER DOPPELSTRÖMUNG, HAUPTSÄCHLICH FÜR KRAFTFAHRZEUGE UND BAUMASCHINEN, MIT ZWEI AUSGANGSSTRÖMUNGSABZWEIGUNGEN
AGENCEMENT DE BOÎTE DE VITESSES À DOUBLE FLUX RÉVERSIBLE, PRINCIPALEMENT POUR VÉHICULES AUTOMOBILES ET ENGINS DE CHANTIER, COMPORTANT DEUX BRANCHES DE FLUX DE SORTIE

(30) Priority: 11.05.2012 CZ 20120313
(43) Date of publication of application: 18.03.2015
(73) Proprietor: Zetor Tractors A.S., 628 00 Brno (CZ)
(72) Inventor: LUKES, Miroslav, 629 00 Brno (CZ); LUKÁS, Jan, 664 11 Zbýsov (CZ); SLEZÁK, Martin, 638 00 Brno (CZ)
(74) Representative: Kendereski, Dusan
(86) International application number: PCT/CZ2013/000038
(87) International publication number: WO 2013/167095

(56) References cited:
- EP-A1- 0 797 025
- WO-A1-92/08067
- WO-A1-92/08067
- WO-A1-2005/012762
- GB-A- 2 110 324
- US-A- 5 974 905
- US-A- 5 974 905
- US-B1- 6 186 029

## Description

### Technical Field

The invention relates to an arrangement of reversing double-flow gearbox, mainly for motor vehicles and construction machines with two branches of output flow, i.e. gearboxes with two separate branches of drive and two clutches, extended with reversing of all gears.

### State of the Art

The double-flow gearbox is a special type of semi-automatic device when the output from the engine to the driving shaft can flow through two ways. Closing of one of the pairs of disc clutches sets which one of them transfers the output. One clutch connects odd speed gears, while the other connects even speed gears.

The double-flow gearboxes are manufactured with one reverse gear (passenger cars and lorries) or with lower number of reverse gears than forward gears, while each reverse gear is performed using one inserted wheel which reverses the rotation direction. The reversing of the whole double-flow gearbox i.e. all the speed gears is performed using an additional reversing gearbox with a pair of proper disc clutches (tractors and construction machines).

AO 228977 describes the scheme of double-flow three- up to four gear gearbox for motor vehicles and construction machines with two independent branches of output flow with pre-selection, allowing shifting of gears under load without hydraulic elements in mechanic gearbox. The basis of this invention is the kinematic relation of individual parts of the mechanic gearbox with two input friction clutches and two branches of output flow allowing shifting of individual gears under load. It solves placement of individual elements and clutches with realisation of three or four forward and one reverse gear. The disadvantage of the solution in AO 228977 is the low number of gears and version with one reverse gear, impossibility of reversing all the gears as required by modern gearboxes of tractors and construction machines.

EP 0797025 A1 discloses an arrangement for double-flow gearbox with two branches of output flow, consisting of an input shaft equipped with a tooth wheel engaged with two other tooth wheels on each side, wherein each of these tooth wheels is connected with a disc clutch thereby forming two independent branches of output flow. The output shaft of each of the two disc clutches is interconnected via a first synchronisation clutch and a second synchronisation clutch with another two sets of tooth wheels (having two disc clutches, there are four sets of tooth wheels in total) that are engaged with a central set of tooth wheels engaged on the central output shaft with one sense of revolutions for all the speed stages. In this invention, advanced reversing capabilities are provided in a complicated manner as this arrangement cannot perform a reverse in the sense of revolutions while maintaining all available speed stages. Moreover, the change in the sense of revolutions is performed at the input of the two disc clutches by means of two sets of inserted gears and two synchronisation clutches, which results in greater number of shafts, tooth wheels and gearing elements as well as in reduced efficiency.

US 6186029 B1 discloses a multi-flow gearbox arrangement with two branches of output flow wherein each gear is shifted by its own disc clutch comprising two torque flows with two layshafts arranged in parallel with an output shaft. The first and the second layshaft are interconnected by two inserted sets of gears with a gearing synchronisation clutch arranged on the second layshaft. The high number of disc clutches causes a decrease in efficiency and an increase in complexity of the whole arrangement.

Both GB 2110324 A and WO 2005/012762 A1 disclose a gearbox comprising two clutches, two clutch output shafts, an output shaft of the gearbox, a plurality of tooth wheels defining two torque flows through the gearbox and a clutch-actuated interconnected gearset between the two clutch output shafts. Neither of these gearboxes is fully reversible as they both contain more forward than reverse gears.

US 5974905 A discloses a motor vehicle gearbox with two concentrically mounted input shafts, each driving an individual layshaft and having gears in engagement with gears on an output shaft. One layshaft has a central synchronizing device, by means of which the layshaft can be accelerated up to a rotational speed determined by the selected gear speed. The central synchronization device has a friction clutch and two synchronization gears, one of which is wider than the other and is lockable to the shaft with the aid of an engaging sleeve, so that driving torque can be transmitted via the synchronization gear. There is an inserted gearwheel for reversing the speed stages by coupling two layshafts together. The gearbox provides seven forward and six reverse speed stages and either a crawl gear or an overdrive, hence is not fully reversible in all its speed stages despite having an inserted wheel for reversing. It is essential to note that as opposed to a synchronisation clutch, an engagement sleeve does not allow the coupling of two independently revolving shafts with different speeds and requires instead that a pre-synchronisation assembly (central synchronisation device) is co-ordinated with the layshafts. It is important to note that the pre-synchronisation accounts for approximately half of the synchronising work. Bearing that in mind, the remaining approximately 50 % of the pre-synchronisation has to be achieved by hard synchronisation of one tooth wheel against another in order to match the number of revolutions of two shafts to be synchronised. Consequently there is a need for an increased number of gear wheels and engagement sleeves, which in turn causes greater complexity, slower synchronisation and losses in transmitted flow, since every additional gearing will produce friction. In order to minimize losses in performance when transmitting drive, it is advantageous to couple as few gears and engagement sleeves or other coupling means as possible. A mere extraction of a pre-synchronisation assembly and five engagement sleeves and their replacement with synchronisation clutches would result in an arrangement with 8 forward speed stages, 6 reverse speed stages and five synchronisation clutches.

WO 92/08067 discloses a motor vehicle gearbox with an input shaft, two layshafts and an output shaft. There is an inserted gearwheel for reversing the speed stages by coupling two layshafts together. The gearbox provides seven forward speed stages and only one reverse, hence is not fully reversible in all its speed stages. The inserted wheel enables the reversal of only one speed stage. The coupling of independently revolving shafts with different speeds is again achieved by means of engagement sleeves and a central synchronizer. Similarly as described above, the use of an increased number of gear wheels and engagement sleeves is disadvantageous, since the performance of the gearbox is not maintained at an acceptable level.

The disadvantage of other current double-flow gearboxes is the fact that for reversing all the gears there is needed another pair of disc clutches with their own reversing gearbox.

### Summary of the Invention

The aim of this invention is to design such a system of kinematic arrangement of a double-flow gearbox that allows for the double-flow gearbox with one direction of rotation of the output shaft to change the direction of rotation of the output shaft for all the gears using one inserted tooth wheel and one synchronisation clutch.

This invention claims an arrangement of a fully reversing double-flow gearbox, mainly for motor vehicles and construction machines, wherein all forward speed stages are reversible and with two branches of output flow comprising an input shaft 13 and a gearbox output shaft 10, arranged co-axially. The drive from the input shaft 13 is interconnected to a first disc clutch 1 and a second disc clutch 2.

The first disc clutch 1 and the second disc clutch 2 are mounted on the input shaft 13, thereby producing two branches of output flow. The first branch of output flow comprises the first disc clutch 1 connected to a first disc clutch output shaft 11, and wherein the second branch of output flow comprises the second disc clutch 2 connected to a second disc clutch output shaft 15.

The first branch of the output flow further comprises a tooth wheel 14 fixedly mounted on the first disc clutch output shaft 11 and engaged with a first tooth wheel 31 fixedly mounted on a first layshaft 16. The first layshaft 16 further supports a second tooth wheel 32 and a third tooth wheel 33 all fixedly mounted thereon.

The second branch of the output flow further comprises a tooth wheel 51 fixedly mounted on the second disc clutch output shaft 15 and engaged with a tooth wheel 52 fixedly mounted on a second layshaft 12. The second layshaft 12 supports a forth tooth wheel 41, a fifth tooth wheel 42 and a sixth tooth wheel 43 all fixedly mounted thereon.

A first synchronisation clutch 61, a second synchronisation clutch 62, and a third synchronisation clutch 63 are fixedly mounted on the gearbox output shaft 10, and a seventh to eleventh tooth wheels 71 to 75 are further detachably mounted on the gearbox output shaft 10.

The first synchronisation clutch 61 is detachably connectable selectively Z on one side to the tooth wheel 14 or on the other side to the seventh tooth wheel 71, the second synchronisation clutch 62 is detachably connectable selectively on one side to the tenth tooth wheel 74 or on the other side to the eleventh tooth wheel 75, and the third synchronisation clutch 63 is detachably connectable selectively on one side to the eighth tooth wheel 72 or on the other side to the ninth tooth wheel 73. Moreover, the seventh tooth wheel 71 is engaged with the second tooth wheel 32, the eighth tooth wheel 72 is engaged with the third tooth wheel 33, the ninth tooth wheel 73 is engaged with the forth tooth wheel 41, the tenth tooth wheel 74 is engaged with the fifth tooth wheel 42, and the eleventh tooth wheel 75 is engaged with the sixth tooth wheel 43.

The main feature of this invention is that the first tooth wheel 31 is further engaged with an inserted tooth wheel 8 detachably mounted on the second layshaft 12. At the same time, a reversing synchronisation clutch 9, which is fixedly mounted on the second layshaft 12, is detachably connectable to the inserted tooth wheel 8.

The inserted tooth wheel 8 is connected to a kinematic system of the double-flow gearbox in such a way that after shifting the reversing synchronisation clutch 9 and the switch-over of disc clutches 1 and 2 there occurs a reverse in revolutions of the gearbox output shaft 10 for a given shifted gear. In this way, it is possible to reverse all the gears of the double-flow gearbox and simultaneously, it is possible to change individual gears - with shifted reversing - of the double-flow gearbox and to change in this way the transmission of reversing revolutions of the gearbox output shaft 10. The reversing control is independent on the number of gears of the double-flow gearbox.

### Brief Description of the Drawings

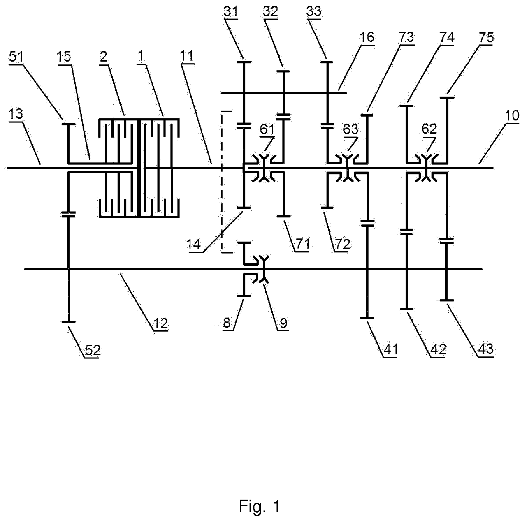

The invention will be explained in detail, where Fig. 1 shows a scheme of a kinematic arrangement of a reversing 6º double-flow gearbox.

### Exemplary Embodiment of the Invention

The arrangement of the double-flow reversing gearbox according to this invention will be explained using a preferred embodiment which does not have any limiting influence on the scope of protection.

A sample arrangement of a reversing 6º double-flow gearbox is shown in Fig. 1. The arrangement of the input shaft **13** and the gearbox output shaft **10** is coaxial. The drive from the input shaft **13** leads to the first disc clutch **1** and the second disc clutch **2.** The first branch of the flow consists of the first disc clutch **1** co-axially connected to the first disc clutch output shaft **11** and via the tooth wheel **14** with the first tooth wheel **31**, fixedly mounted on the first layshaft **16** along with the second tooth wheel **32** and the third tooth wheel **33.** The second branch of the flow consists of the second disc clutch **2** co-axially connected to the second disc clutch output shaft **15**, wherein a tooth wheel **51** mounted on the second disc clutch output shaft **15** is engaged with a tooth wheel **52** mounted on the second layshaft **12** which then supports the forth tooth wheel **41**, the fifth tooth wheel **42** and the sixth tooth wheel **43**, all fixedly mounted thereon. The second and the third tooth wheel **32, 33** as well as the forth, the fifth and the sixth tooth wheels **41, 42, 43** are engaged with tooth wheels **71, 72, 73, 74** and **75** (seventh to eleventh) detachably mounted on the gearbox output shaft **10** and they are interconnected with the gearbox output shaft **10** via the first synchronisation clutch **61** shifting the speed stages of the first branch of the flow, the second synchronisation clutch **62** shifting the speed stages of the second branch of the flow and the third synchronisation clutch **63** shifting with one side the speed stage of the first branch of the flow and with the other side the speed stage of the second branch of the flow.

The inserted tooth wheel **8** is engaged with the first tooth wheel **31**, which is further engaged with the tooth wheel **14** and the inserted tooth wheel **8** is detachably mounted on the second layshaft **12.** The shifted reversing synchronisation clutch **9** is fixedly mounted on the second layshaft **12** and detachably connectable to the inserted tooth wheel **8.**

The principle of reversing is as follows. The vehicle goes forward and the drive is performed e.g. by the first branch of the flow with included first disc clutch **1.** So there is engaged the first disc clutch **1** and revolutions are then transferred directly from the first disc clutch output shaft **11** to the gearbox output shaft **10** or via the tooth wheel 1**4** to the first, the second or the third tooth wheels **31, 32** and **33** to the co-engaged seventh and eighth tooth wheels **71** and **72** interconnected by the first and the third synchronisation clutch **61** and **63** with the gearbox output shaft **10.** The second disc clutch **2** is disconnected, even the second synchronisation clutch **62** in the second branch of the flow is not shifted and the reversing synchronisation clutch **9** is not shifted as well. After inclusion of the reversing synchronisation clutch **9**, the inserted tooth wheel **8** drives even the second layshaft **12** of the second disc clutch **2**, but in opposite direction of rotation. After consequent disconnection of the first disc clutch **1** and connection of the second disc clutch **2** via the second disc clutch output shaft **15** and the tooth wheels **51** and **52** the reversing is performed, i.e. reverse direction of revolutions of the gearbox output shaft **10** for given speed stage shifted by the first synchronisation clutch **61** or the third synchronisation clutch **63** in the first branch of the drive. In this way, there is arranged reversing for all the speed stages performed by the first branch of the flow. In case of the forward movement to be performed by the second branch of the flow with the second disc clutch **2** the activity is analogical, the movement is transferred by the first, the second or the third tooth wheels **41, 42, 43** and shifted second synchronisation clutch **62** or the third synchronisation clutch **63** via the ninth, tenth or eleventh tooth wheels **73, 74** and **75** it is lead to the gearbox output shaft **10.** Based on repeated shifting of the reversing synchronisation clutch **9** with consequent disconnection of the second disc clutch **2** and connection of the first disc clutch **1** there is performed reversing of revolutions of the gearbox output shaft **10** for the given speed stage.

### Industrial applicability

This invention can be used with tractors, construction machines and other mobile means.

### List of reference signs

- 1: first disc clutch
- 2: second disc clutch
- 8: inserted tooth wheel
- 9: reversing synchronisation clutch
- 10: gearbox output shaft
- 11: first disc clutch output shaft
- 12: second layshaft
- 13: input shaft
- 14: tooth wheel of the first disc clutch output shaft 11
- 15: second disc clutch output shaft
- 16: first layshaft
- 31: first tooth wheel
- 32: second tooth wheel
- 33: third tooth wheel
- 41: forth tooth wheel
- 42: fifth tooth wheel
- 43: sixth tooth wheel
- 51: tooth wheel of the second disc clutch output shaft 15
- 52: tooth wheel of the second layshaft 12
- 61: first synchronisation clutch
- 62: second synchronisation clutch
- 63: third synchronisation clutch
- 71: seventh tooth wheel
- 72: eighth tooth wheel
- 73: ninth tooth wheel
- 74: tenth tooth wheel
- 75: eleventh tooth wheel

## Claims

1. Arrangement of a fully reversing double-flow gearbox, for motor vehicles and construction machines, with two branches of output flow, wherein all forward speed stages are reversible, the arrangement comprising an input shaft (**13**) and a gearbox output shaft (**10**), arranged co-axially, wherein a first disc clutch (**1**) and a second disc clutch (**2**) are mounted on the input shaft (**13**), thereby producing two branches of output flow, wherein the first branch of output flow comprises the first disc clutch (**1**) connected to a first disc clutch output shaft (**11**), and wherein the second branch of output flow comprises the second disc clutch (**2**) connected to a second disc clutch output shaft (**15**),
wherein the first branch of output flow further comprises a tooth wheel (**14**) fixedly mounted on the first disc clutch output shaft (**11**) and engaged with a first tooth wheel (**31**) fixedly mounted on a first layshaft (**16**), wherein the first layshaft (**16**) further supports a second tooth wheel (**32**) and a third tooth wheel (**33**) all fixedly mounted thereon,
wherein the second branch of output flow further comprises a tooth wheel (**51**) fixedly mounted on the second disc clutch output shaft (**15**) and engaged with a tooth wheel (**52**) fixedly mounted on a second layshaft (**12**), wherein the second layshaft (**12**) supports a forth tooth wheel (**41**), a fifth tooth wheel (**42**) and a sixth tooth wheel (**43**) all fixedly mounted thereon,
wherein a first synchronisation clutch (**61**), a second synchronisation clutch (**62**), and a third synchronisation clutch (**63**) are fixedly mounted on the gearbox output shaft (**10**), and seventh to eleventh tooth wheels (**71** to **75**) are further detachably mounted on the gearbox output shaft (**10**),
wherein the first synchronisation clutch (**61**) is detachably connectable selectively on one side to the tooth wheel **(14)** fixedly mounted on the first disc clutch output shaft (11) or on the other side to the seventh tooth wheel **(71)**, the second synchronisation clutch **(62)** is detachably connectable selectively on one side to the tenth tooth wheel (**74**) or on the other side to the eleventh tooth wheel **(75),** and the third synchronisation clutch **(63)** is detachably connectable selectively on one side to the eighth tooth wheel **(72)** or on the other side to the ninth tooth wheel **(73),** wherein the seventh tooth wheel **(71)** is engaged with the second tooth wheel (**32**), the eighth tooth wheel (**72**) is engaged with the third tooth wheel (**33**), the ninth tooth wheel (**73**) is engaged with the forth tooth wheel (**41**), the tenth tooth wheel (**74**) is engaged with the fifth tooth wheel (**42**), and the eleventh tooth wheel (**75**) is engaged with the sixth tooth wheel (**43**), wherein the first tooth wheel (**31**) is further engaged with an inserted tooth wheel (**8**) detachably mounted on the second layshaft (**12**), wherein a reversing synchronisation clutch (**9**) is fixedly mounted on the second layshaft (**12**) and detachably connectable to the inserted tooth wheel (**8**).

## Patentansprüche

1. Anordnung eines vollständig umkehrbares Doppelströmungsgetriebes, für Kraftfahrzeuge und Baumaschinen, mit zwei Ausgangsströmungszweigungen, wobei alle Vorwärtsgangstufen umkehrbar sind, wobei die Anordnung
eine Eingangswelle (**13**) und eine koaxial angeordnete Getriebeausgangswelle (**10**) aufweist,
wobei eine erste Scheibenkupplung (**1**) und eine zweite Scheibenkupplung (**2**) auf der Eingangswelle (**13**) angebracht sind, wodurch zwei Ausgangsströmungszweigungen erzeugt werden, wobei der erste Abzweig der Ausgangsströmung die erste Scheibenkupplung (**1**) umfasst, die mit einer ersten Scheibenkupplungs-Ausgangswelle (**11**) verbunden ist, und wobei der zweite Abzweig der Ausgangsströmung die zweite Scheibenkupplung (**2**) umfasst, die mit einer zweiten Scheibenkupplungs-Ausgangswelle (**15**) verbunden ist,
wobei der erste Abzweig der Ausgangsströmung ferner ein fest auf der ersten Scheibenkupplungs-Ausgangswelle (**11**) angebrachtes Zahnrad (**14**) aufweist, das mit einem auf einem ersten Vorgelege (16) fest angebrachten ersten Zahnrad (**31**) in Eingriff steht, wobei das erste Vorgelege (**16**) ferner ein zweites Zahnrad (**32**) und ein drittes Zahnrad (**33**) trägt, die alle darauf fest angebrachten sind,
wobei der zweite Abzweig der Ausgangsströmung ferner ein fest auf der zweiten Scheibenkupplungs-Ausgangswelle (**15**) angebrachtes Zahnrad (**51**) aufweist, das mit einem auf einem zweiten Vorgelege (**12**) fest angebrachten Zahnrad (**52**) in Eingriff steht, wobei das zweite Vorgelege (**12**) ein viertes Zahnrad (**41**), ein fünftes Zahnrad (**42**) und ein sechstes Zahnrad (**43**) trägt, die alle darauf fest angebrachten sind,
wobei eine erste Synchronisationskupplung (**61**), eine zweite Synchronisationskupplung (**62**) und eine dritte Synchronisationskupplung (**63**) fest auf der Getriebeausgangswelle (**10**) angebracht sind, und siebte bis elfte Zahnräder (**71** bis **75**) weiter lösbar an der Getriebeausgangswelle (**10**) angebracht sind,
wobei die erste Synchronisationskupplung (**61**) wahlweise einerseits mit dem Zahnrad (**14**), das auf der ersten Scheibenkupplungsausgangswelle (**11**) fest angebracht ist, oder andererseits mit dem siebten Zahnrad (**71**) lösbar verbindbar ist, die zweite Synchronisationskupplung (**62**) wahlweise einerseits mit dem zehnten Zahnrad (**74**) oder andererseits mit dem elften Zahnrad (**75**) lösbar verbindbar ist und die dritte Synchronisationskupplung (**63**) wahlweise einerseits mit dem achten Zahnrad (**72**) oder andererseits mit dem neunten Zahnrad (**73**) lösbar verbindbar ist, wobei das siebte Zahnrad (**71**) mit dem zweiten Zahnrad (**32**) in Eingriff steht, das achte Zahnrad (**72**) mit dem dritten Zahnrad (**33**) in Eingriff steht, das neunte Zahnrad (**73**) mit dem vierten Zahnrad (**41**) in Eingriff steht, das zehnte Zahnrad (**74**) mit dem fünften Zahnrad (**42**) in Eingriff steht und das elfte Zahnrad (**75**) mit dem sechsten Zahnrad (**43**) in Eingriff steht,
wobei das erste Zahnrad (**31**) ferner mit einem eingelegten Zahnrad (**8**) in Eingriff steht, welches Zahnrad (**8**) lösbar auf dem zweiten Vorgelege (**12**) angebracht ist, wobei eine umkehrbare Synchronisationskupplung (**9**) fest auf dem zweiten Vorgelege (**12**) angebracht und mit dem eingelegten Zahnrad (**8**) lösbar verbindbar ist.

## Revendications

1. Un agencement de boîte de vitesses à double flux totalement réversible, pour véhicules automobiles et engins de chantier, avec deux branches de flux de sortie, où tous les étages de vitesse avant sont réversibles, l'agencement comprenant
un arbre d'entrée (**13**) et un arbre de sortie de boîte de vitesses (**10**), agencés coaxialement,
où un premier embrayage à disque (**1**) et un second embrayage à disque (**2**) sont montés sur l'arbre d'entrée (**13**), produisant ainsi deux branches de flux de sortie, où la première branche de flux de sortie comprend le premier embrayage à disque (**1**) relié à un premier arbre de sortie d'embrayage à disque (**11**), et où la seconde branche de flux de sortie comprend le second embrayage à disque (**2**) relié à un second arbre de sortie d'embrayage à disque (**15**),
où la première branche de flux de sortie comprend en outre une roue dentée (**14**) montée de manière fixe sur le premier arbre de sortie d'embrayage à disque (**11**) et en prise avec une première roue dentée (**31**) montée de manière fixe sur un premier arbre intermédiaire (**16**), où le premier arbre intermédiaire (**16**) supporte en outre une seconde roue dentée (**32**) et une troisième roue dentée (**33**) toutes montées de manière fixe sur celui-ci,
où la seconde branche de flux de sortie comprend en outre une roue dentée (**51**) montée de manière fixe sur le second arbre de sortie d'embrayage à disque (**15**) et en prise avec une roue dentée (**52**) montée de manière fixe sur un second arbre intermédiaire (**12**), où le second arbre intermédiaire (**12**) supporte une quatrième roue dentée (**41**), une cinquième roue dentée (**42**) et une sixième roue dentée (**43**) toutes montées de manière fixe sur celui-ci,
où un premier embrayage de synchronisation (**61**), un deuxième embrayage de synchronisation (**62**) et un troisième embrayage de synchronisation (**63**) sont montés de manière fixe sur l'arbre de sortie de boîte de vitesses (**10**), et des septième à onzième roues dentées (**71** à **75**) sont en outre montées de manière amovible sur l'arbre de sortie de boîte de vitesses (**10**),
où le premier embrayage de synchronisation (61) est connectable de manière amovible sélectivement d'un côté à la roue dentée (14) montée de manière fixe sur le premier arbre de sortie d'embrayage à disque (11) ou de l'autre côté à la septième roue dentée (71), le deuxième embrayage de synchronisation (62) est connectable de manière amovible sélectivement d'un côté à la dixième roue dentée (74) ou de l'autre côté à la onzième roue dentée (75), et le troisième embrayage de synchronisation (63) est connectable de manière amovible sélectivement d'un côté à la huitième roue dentée (**72**) ou de l'autre côté à la neuvième roue dentée (**73**), où la septième roue dentée (**71**) est en prise avec la deuxième roue dentée (**32**), la huitième roue dentée (**72**) est en prise avec la troisième roue dentée (**33**), la neuvième roue dentée (**73**) est en prise avec la sixième roue dentée (**41**), la dixième roue dentée (**74**) est en prise avec la cinquième roue dentée (**42**), et la onzième roue dentée (**75**) est en prise avec la sixième roue dentée (**43**),
où la première roue dentée (**31**) est en outre en prise avec une roue dentée insérée (**8**) montée de manière amovible sur le deuxième arbre intermédiaire (**12**), où un embrayage de synchronisation réversible (**9**) est monté de manière fixe sur le deuxième arbre intermédiaire (**12**) et connectable de manière amovible à la roue dentée insérée (**8**).
